# EUROPEAN PATENT SPECIFICATION

(11) **EP 3 345 879 B1**
(45) Date of publication and mention of the grant of the patent: **15.04.2020**
(21) Application number: 16841090.0
(22) Date of filing: 23.08.2016
(51) Int. Cl.: C04B 7/47, F27D 15/02, F28C 3/16, F27B 7/38

(54) **COOLING GRID OF COOLER DEVICE, AND COOLER DEVICE PROVIDED THEREWITH**
KÜHLGITTER FÜR EINE KÜHLERVORRICHTUNG UND KÜHLERVORRICHTUNG DAMIT
GRILLE RÉFRIGÉRANTE DE DISPOSITIF DE REFROIDISSEMENT ET DISPOSITIF DE REFROIDISSEMENT DOTÉ DE CELLE-CI

(30) Priority: 31.08.2015 CN 201510545860
(43) Date of publication of application: 11.07.2018
(73) Proprietor: Kawasaki Jukogyo Kabushiki Kaisha, Kobe-shi, Hyogo 650-8670 (JP)
(72) Inventor: DEI, Koichi, Hyogo 650-8670 (JP); OCHI, Shigeki, Hyogo 650-8670 (JP); YAMAGATA, Yasushi, Hyogo 650-8670 (JP); OSAWA, Hiroaki, Hyogo 650-8670 (JP); BANDO, Hiroshi, Hyogo 650-8670 (JP); YOSHINAGA, Akihiro, Hyogo 650-8670 (JP); YAMAGUCHI, Yoshihisa, Hyogo 650-8670 (JP)
(74) Representative: Leinweber & Zimmermann
(86) International application number: PCT/JP2016/003832
(87) International publication number: WO 2017/038050

(56) References cited:
- CN-U- 201 834 860
- DE-U1- 8 330 207
- JP-A- H08 501 868
- JP-A- H09 169 552
- JP-A- 2013 133 247

## Description

### Technical Field

The present invention relates to a cooling grate of a cooler apparatus for cooling down a high-temperature granular conveyed material, such as granular cement clinker, while conveying the granular conveyed material, and also relates to the cooler apparatus including the cooling grate.

### Background Art

A cement plant is equipped with a cooler that conveys high-temperature cement clinker produced through preheating, calcination, and firing while cooling down the cement clinker. One example of such a cooler is disclosed by Patent Literature 1. The cooler of Patent Literature 1 includes a plurality of cooling grates. The cooling grates are assembled together such that the cooling grates are arranged in the longitudinal direction of the cooler. Each cooling grate has a plurality of V-shaped profiles. The V-shaped profiles are arranged mirror-symmetrically opposite one another, but offset in relation to one another, and vertically stacked together, such that an intermediate space (i.e., labyrinth) is formed between the legs of adjacent V-shaped profiles. High-temperature cement clinker lies on the cooling grates thus configured. The cement clinker can be conveyed by moving the cooling grates. Cooling air is supplied under the cooling grates. The cement clinker can be cooled down by feeding the cooling air to the cement clinker through the labyrinth.

### Citation List

### Patent Literature

PTL 1: Japanese National Phase PCT Laid-Open Application Publication No. 2007-515365

### Summary of Invention

### Technical Problem

In the cooler disclosed in Patent Literature 1, gaps and the like of the labyrinth are set such that the ratio of a passing pressure loss occurring when the cooling air passes through the cooling grates to a passing pressure loss occurring when the cooling air passes through a clinker bed formed on the cooling grates is a predetermined ratio. Such setting is intended for suppressing the occurrence of an uneven flow of the cooling air and bringing the flow rate distribution of the cooling air close to even distribution. However, in the cooler of Patent Literature 1, the V-shaped profiles are simply stacked together in the vertical direction. Therefore, the height of the labyrinth is uneven due to displacement, deformation, and so forth of the V-shaped profiles. As a result, the passing pressure loss occurring when the cooling air passes through the cooling grates varies depending on which part of the labyrinth the cooling air passes through, and for this reason, the flow rate distribution of the cooling air is uneven. Consequently, an uneven flow of the cooling air occurs. Therefore, the clinker bed cannot be evenly cooled down.

In view of the above, an object of the present invention is to provide a cooling grate of a cooler apparatus, the cooling grate being capable of suppressing variation in the passing pressure loss of the cooling air.

A cooler grate according to the pre-characterizing clause of claim 1 is known from CN 201834860 U.

According to the invention, the above object is achieved by a cooler grate according to claim 1.

According to the present invention, each covering member has a tapered shape. Therefore, at the time of mounting the covering member on the placement portions, the covering member can be placed on the placement portions in a state where the covering member is positioned at a desirable position. This makes it possible to lower the possibility of the covering member being disposed at an undesirable position, and the spacers can be assuredly interposed between the covering member and the placement portions. Since the spacers are interposed between the covering member and the placement portions, the dimension of gaps formed between the covering member and the placement portions can be made substantially constant. The spacers are arranged in the orthogonal direction at intervals, and the cooling air that has passed through the slits can be released between the spacers. Since the dimension of the gaps formed between the covering member and the placement portions is substantially constant, variation in pressure loss of the cooling air released between the spacers can be suppressed. This consequently makes it possible to suppress the passing pressure loss of the cooling air passing through the cooling grate from varying in the orthogonal direction.

According to the above configuration, the surface area of inner surfaces of the tapered portion is larger than the surface area of the upper ends of the placement portions. Therefore, at the time of mounting the spacers, welding the spacers to the inner surfaces of the tapered portion is easier than welding the spacers to the placement portions.

In the above-described present invention, the predetermined direction may be a conveying direction in which the granular conveyed material is conveyed.

According to the above configuration, the placement portions and the covering members are arranged such that they extend in the orthogonal direction. Therefore, when the dead layer is about to move in accordance with movement of the granular conveyed material, the movement of the dead layer can be suppressed since the placement portions and the covering members are in contact with the dead layer.

A cooler apparatus according to the present invention includes a plurality of cooling grate lines, each cooling grate line including a plurality of the cooling grates according to any one of the above-described aspects, the cooling grates being arranged side by side in the predetermined direction, the plurality of cooling grate lines being arranged side by side in the orthogonal direction. The plurality of the cooling grates are arranged side by side in the predetermined direction, such that the cooling grates are spaced apart from each other. The plurality of the cooling grates are coupled to each other by welding end portions of the support members of the cooling grates that are adjacent to each other to a fixed plate.

The above configuration makes it possible to reduce the size of each cooling grate, and improve the portability of the cooling grate. The cooling grates are fixed to each other by welding end portions of the adjacent support members to the fixed plate. Thus, the assembling is easy. In addition, by spacing the cooling grates apart from each other, the space between the covering members can be made wide. As a result, a welding tool used in the welding work, such as a welding rod, can be readily brought close to the fixed plate, and thus assemblability is not impaired.

### Advantageous Effects of Invention

The present invention makes it possible to suppress variation in the passing pressure loss of the cooling air.

### Brief Description of Drawings

Fig. 1 is a schematic diagram showing the configuration of a cement plant including a cooler apparatus according to the present invention.
Fig. 2 is a perspective view schematically showing the configuration of the cooler apparatus of Fig. 1.
Fig. 3 is an enlarged perspective cutaway view showing the configuration of part of a cooling grate line of the cooler apparatus of Fig. 2
Fig. 4 is an enlarged perspective view of the cooling grate line of Fig. 3, the view showing a state where components including attachment plates are removed from the cooling grate line.
Fig. 5 is a side view of cooling grates of Fig. 4 as seen in the direction of arrow A.
Fig. 6 is an enlarged perspective view showing part of the configuration of a cooling grate of a cooler apparatus according to Embodiment 2 of the present invention.
Fig. 7 is a side view of the cooling grate of Fig. 6 as seen in the direction of arrow B.

### Description of Embodiments

Hereinafter, cooling grates 1 and 1A and a cooler apparatus 2 including the same according to Embodiments 1 and 2 of the present invention are described with reference to the drawings. Directions mentioned in the description below are used for the sake of convenience of the description, but do not suggest that the orientation and the like of the components of the present invention are limited to such directions. The cooling grates 1 and 1A described below are merely embodiments of the present invention. Therefore, the present invention is not limited to the embodiments below, and additions, deletions, and modifications can be made to the embodiments without departing from the spirit of the present invention.

### [Embodiment 1]

### <Cement Plant>

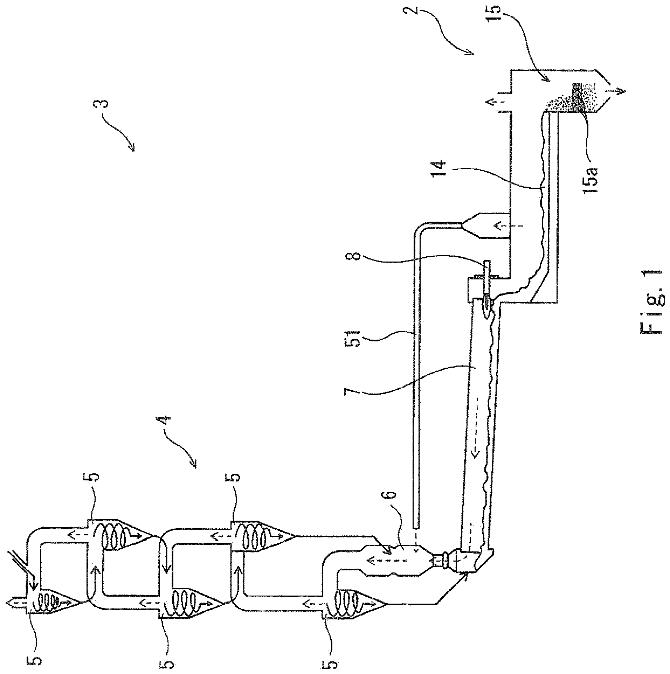

Cement is produced through the following steps: a raw meal grinding step of grinding cement raw meal containing limestone, clay, silica stone, iron, and so forth; a pyroprocessing step of firing the ground cement raw meal; and a finishing step that is the final step. These three steps are performed in a cement plant. In the pyroprocessing step, which is one of these three steps, the ground cement raw meal is fired and cooled down, and thereby granular cement clinker is produced. Fig. 1 shows a pyroprocessing facility 3 of the cement plant, and shows a part where the pyroprocessing step in cement manufacturing is performed. The pyroprocessing facility 3 performs preheating, calcination, and firing of the cement raw meal that has been ground in the raw meal grinding step, and cools down the granular cement clinker that is in a high-temperature state due to the firing.

The part where the pyroprocessing step is performed is hereinafter described in further detail. The pyroprocessing facility 3 includes a preheater 4, and the preheater 4 includes a plurality of cyclones 5. The cyclones 5 are arranged vertically in a staged manner. Each cyclone 5 causes exhaust gas therein to flow upward to the cyclone 5 of the upper stage (see dashed arrows in Fig. 1), separates cement raw meal fed therein by a swirl flow, and feeds the separated cement raw meal into the cyclone 5 of the lower stage (see solid arrows in Fig. 1). The cyclone 5 positioned immediately above the cyclone 5 of the lowermost stage feeds the cement raw meal into a precalciner 6. The precalciner 6 includes a burner. By heat from the burner and heat from exhaust gas described below, the precalciner 6 causes a reaction by which carbon dioxide is separated from the fed cement raw meal (i.e., calcination reaction). The cement raw meal subjected to the calcination reaction in the precalciner 6 is led to the cyclone 5 of the lowermost stage as described below, and the cement raw meal in the lowermost cyclone 5 is supplied to a rotary kiln 7.

The rotary kiln 7 is formed in a horizontally long cylindrical shape, and is several tens of meters long or longer. The rotary kiln 7 is disposed such that it is slightly inclined downward from an inlet positioned at the cyclone 5 side toward an outlet positioned at the forward end side. Therefore, by rotating the rotary kiln 7 about its axis, the cement raw meal present at the inlet side is conveyed toward the outlet side. A combustor 8 is provided at the outlet of the rotary kiln 7. The combustor 8 generates a high-temperature flame, and fires the cement raw meal.

Also, the combustor 8 injects high-temperature combustion gas toward the inlet side, and the combustion gas injected by the combustor 8 flows in the rotary kiln 7 toward the inlet while firing the cement raw meal. The combustion gas that flows as high-temperature exhaust gas forms a jet flow. The jet flow flows upward in the precalciner 6 from the lower end of the precalciner 6 (see dashed arrows in Fig. 1), and causes the cement raw meal fed in the precalciner 6 to flow upward. The cement raw meal is heated to about 900°C by the exhaust gas and the burner, that is, the cement raw meal is calcined. The cement raw meal flowing upward flows together with the exhaust gas into the cyclone 5 of the lowermost stage, in which the exhaust gas and the cement raw meal that have flowed therein are separated from each other. The separated cement raw meal is supplied to the rotary kiln 7, and the separated exhaust gas is caused to flow upward to the cyclone 5 positioned immediately above the cyclone 5 of the lowermost stage. The exhaust gas flowing upward exchanges heat, in each cyclone 5, with the cement raw meal fed therein to heat the cement raw meal. Then, the exhaust gas is separated from the cement raw meal again. The separated exhaust gas flows further upward to the cyclone 5 positioned above to repeat the heat exchange. Then, the exhaust gas is discharged to the atmosphere from the cyclone 5 of the uppermost stage.

In the pyroprocessing facility 3 configured as above, the cement raw meal is fed therein at a position near the cyclone 5 of the uppermost stage; the fed cement raw meal is sufficiently preheated while exchanging heat with the exhaust gas, and moves downward to the cyclone 5 positioned immediately above the cyclone 5 of the lowermost stage; and then the cement raw meal is fed into the precalciner 6. In the precalciner 6, the cement raw meal is calcined by the burner and the high-temperature gas. Thereafter, the cement raw meal is led to the cyclone 5 of the lowermost stage, in which the cement raw meal is separated from the exhaust gas and supplied to the rotary kiln 7. The supplied cement raw meal is conveyed toward the outlet side while being subjected to the firing in the rotary kiln 7. As a result of performing the preheating, calcination, and firing in this manner, the cement clinker is formed. The cooler apparatus 2 is provided at the outlet of the rotary kiln 7, and the formed cement clinker is discharged from the outlet of the rotary kiln 7 to the cooler apparatus 2.

### <Cooler Apparatus>

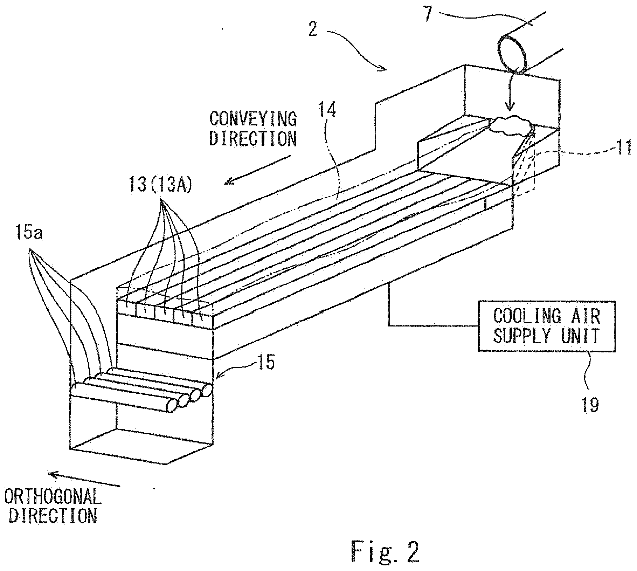

The cooler apparatus 2 is configured to cool down the cement clinker (high-temperature granular conveyed material) discharged from the rotary kiln 7 while conveying the cement clinker in a predetermined conveying direction. A fixed inclined grate 11 is disposed immediately under the outlet of the rotary kiln 7. The fixed inclined grate 11 is inclined downward in the conveying direction from the outlet side of the rotary kiln 7. The granular cement clinker discharged from the outlet of the rotary kiln 7 falls in the conveying direction in a manner to roll down on the fixed inclined grate 11. At the forward end of the fixed inclined grate 11 in the conveying direction, a plurality of cooling grate lines 13 are provided. The cement clinker is deposited on the plurality of cooling grate lines 13 and forms a clinker bed 14. The cooling grate lines 13 are structures each extending in the conveying direction, and are arranged side by side adjacently to each other in a lateral direction orthogonal to the conveying direction (hereinafter, the lateral direction is also referred to as "the orthogonal direction"). The clinker bed 14 lies on the plurality of cooling grate lines 13, such that the clinker bed 14 entirely covers the plurality of cooling grate lines 13 (see two-dot chain lines in Fig. 2).

The cooling grate lines 13 configured as above include a truck that is not shown, and are movable toward one side and the other side in the conveying direction. The cooling grate lines 13 are moved and stopped repeatedly, and thereby the granular cement clinker is conveyed. Specific examples of the conveyance method include: a method in which all the cooling grate lines 13 arranged in the orthogonal direction are moved forward, and then non-adjacent cooling grate lines 13 are moved backward a plurality of times separately; and a method in which a cross bar extending in the orthogonal direction is provided above the cooling grate lines 13, and the cross bar is moved in the conveying direction to feed the clinker bed 14 in the conveying direction. It should be noted that the configuration for and the method of feeding the clinker bed 14 in the conveying direction are not limited to the above-described examples, but may be any configuration and method, so long as the clinker bed 14 can be fed in the conveying direction. The cement clinker conveyed in this manner falls downward from the forward end of the cooling grate lines 13. A crusher 15 is disposed immediately under the forward end of the cooling grate lines 13.

The crusher 15 is intended for crushing the cement clinker falling from the forward end of the cooling grate lines 13 into finer pieces. As one example, the crusher 15 is a roll crusher. Specifically, the crusher 15 includes four rolls 15a. The four rolls 15a are configured to rotate about respective rotational axes extending in the orthogonal direction, and are arranged side by side in the conveying direction at predetermined intervals. A plurality of teeth are formed on the outer peripheral surfaces of the four rolls 15a. By rotating the four rolls 15a, the cement clinker is led into between the rolls 15a, and thereby crushed. Although a roll crusher is adopted as the crusher 15 in the present embodiment, the configuration of the crusher 15 is not thus limited. Alternatively, a different crusher such as a hammer crusher may be adopted as the crusher 15. The crusher 15 configured as above crushes the cement clinker conveyed thereto, and causes the crushed cement clinker to fall right under the crusher 15.

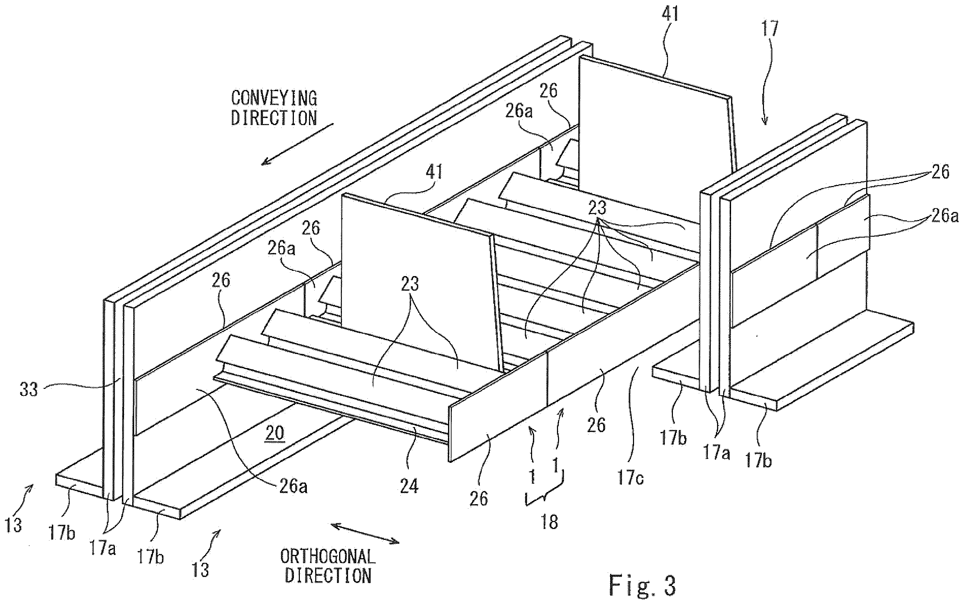

In the cooler apparatus 2 configured as above, the cooling grate lines 13 are moved and stopped repeatedly, and thereby the clinker bed 14 is moved in the conveying direction to the crusher 15. The cooling grate lines 13 are configured to cool down the clinker bed 14 formed thereon while conveying the clinker bed 14. Hereinafter, a detailed configuration of the cooling grate lines 13 is described with reference to Fig. 3 to Fig. 5.

Each cooling grate line 13 is a strip-shaped structure extending from one end to the other end in the conveying direction, and includes a casing 17 and a coupled grate unit 18. The casing 17 is a roughly rectangular casing with an upper opening, and extends in the conveying direction. The casing 17 includes a pair of side walls 17a facing each other in the orthogonal direction and extending in the conveying direction. The coupled grate unit 18 is disposed between the pair of side walls 17a, such that the coupled grate unit 18 fits between the pair of side walls 17a. When seen in a plan view, the coupled grate unit 18 is formed in substantially the same shape as the upper opening of the casing 17. Also, when seen in a plan view, the coupled grate unit 18 fits in the casing 17 in a manner to cover the upper opening of the casing 17. Cement clinker is deposited on the coupled grate unit 18 disposed in this manner, and thereby the clinker bed 14 is formed on the coupled grate unit 18. The coupled grate unit 18 supports the clinker bed 14 formed thereon.

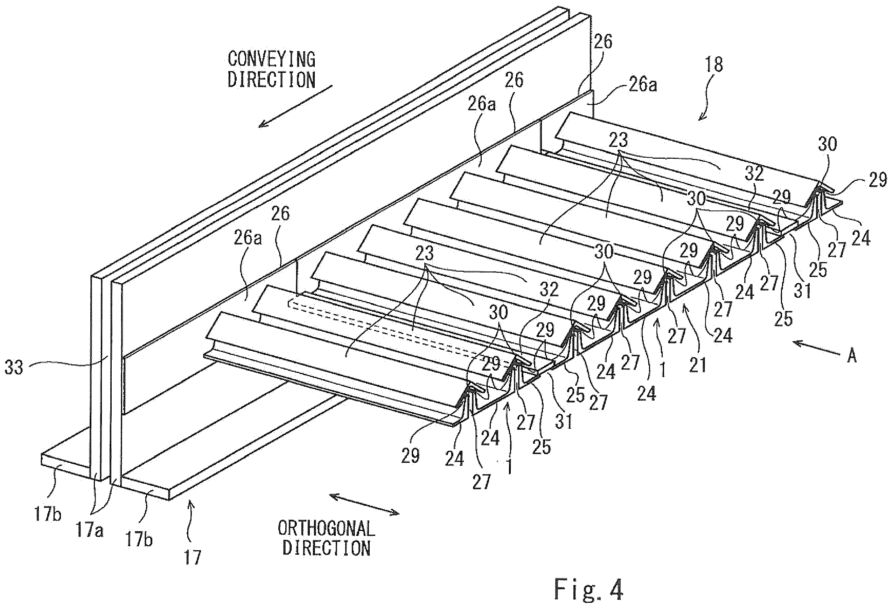

The coupled grate unit 18 is mounted to the pair of side walls 17a in such a manner that the coupled grate unit 18 is spaced apart upward from a bottom surface 17b of the casing 17. Accordingly, below the coupled grate unit 18, a lower space 20 is formed, the upper side of which is covered by the coupled grate unit 18. An opening groove 17c is formed in the bottom surface 17b of the casing 17, and the opening groove 17c is connected to a cooling air supply unit 19. The cooling air supply unit 19 supplies cooling air to the lower space 20 through the opening groove 17c. A plurality of cooling passages 30, which will be described below, are formed in the coupled grate unit 18. The cooling air in the lower space 20 is released to the clinker bed 14 through the plurality of cooling passages 30. In this manner, the clinker bed 14 is cooled down. Hereinafter, the configuration of the coupled grate unit 18 is described in further detail with reference to Figs. 3 and 4.

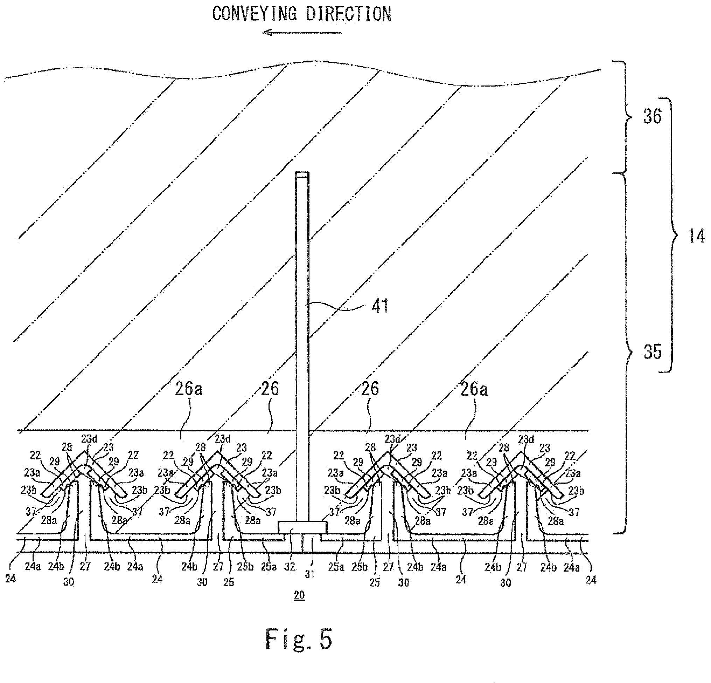

As shown in Fig. 4, the coupled grate unit 18 includes a plurality of cooling grates 1. Each of the plurality of cooling grates 1 is a unitized grate that is formed by coupling together middle support plates 24 and end support plates 25, which will be described below. Each cooling grate 1 includes: a support body 21; a plurality of spacers 22 (see Fig. 5); and a plurality of covering members 23. The support body 21 includes: a plurality of middle support plates 24; two end support plates 25; and a pair of attachment plates 26. It should be noted that, in the present embodiment, the support body 21 includes four middle support plates 24.

Each middle support plate 24, which is one of the support members, is a U-steel member whose cross section is roughly channel-shaped as shown in Fig. 5. Specifically, the middle support plate 24 includes a web portion 24a and a pair of flange portions 24b. The web portion 24a is a flat plate portion that extends in the orthogonal direction and that is roughly strip-shaped when seen in a plan view. The pair of flange portions 24b is such that the flange portions 24b are provided at both ends of the web portion 24a in the conveying direction, respectively, and face each other in the conveying direction. Each of the pair of flange portions 24b extends upward from the corresponding end of the web portion 24a, such that the upper ends of the respective flange portions 24b are substantially flush with each other.

Each end support plate 25, which is one of the support members, is an angle steel member whose cross section is roughly L-shaped. The end support plate 25 includes a web portion 25a and a flange portion 25b. The web portion 25a extends in the orthogonal direction, and is roughly strip-shaped and plate-shaped when seen in a plan view. The flange portion 25b is provided at one end of the web portion 25a. The flange portion 25b extends upward from the one end of the web portion 25a, and has substantially the same height as that of the web portion 24a of the middle support plate 24.

The plurality of support plates 24 and 25 thus configured are arranged in the conveying direction, such that they are spaced apart from each other. The end support plates 25 are arranged such that one of them is positioned at one end and the other is positioned at the other end of the support body 21 in the conveying direction. Accordingly, the four middle support plates 24 are arranged such that they are positioned between the two end support plates 25. Each middle support plate 24 is disposed such that it is open upward and such that the flange portions 24b of the adjacent middle support plates 24 face each other. Also, each end support plate 25 is disposed such that the flange portion 25b thereof faces the flange portion 24b of the adjacent middle support plate 24. In this manner, the six support plates 24 and 25 are arranged such that the flange portions 24b and 25b face each other and are spaced apart from each other, and in this state, the six support plates 24 and 25 are mounted to the pair of attachment plates 26 so as to extend therebetween in a bridging manner.

The pair of attachment plates 26 extend in the conveying direction, and each attachment plate 26 is a strip-shaped plate when seen in a side view. The pair of attachment plates 26 is disposed such that the attachment plates 26 face each other and are spaced apart from each other in the orthogonal direction. The plurality of support plates 24 and 25 are arranged side by side between the pair of attachment plates 26, and the plurality of support plates 24 and 25 are mounted to the pair of attachment plates 26 so as to extend therebetween in a bridging manner. Specifically, both ends of each of the plurality of support plates 24 and 25 in the orthogonal direction are welded to opposite surfaces 26a of the pair of attachment plates 26, the opposite surfaces 26a facing each other. In this manner, the plurality of support plates 24 and 25 are fixed to the pair of attachment plates 26.

In the support body 21 thus configured, gaps are formed between the flange portions 24b facing each other and also between the flange portions 24b and 25b facing each other. These gaps form slits 27. In other words, the flange portions 24b and 25b are positioned at both sides of the slits 27 in the conveying direction in a manner to sandwich the slits 27. The upper ends of the flange portions 24b and 25b thus forming the slits 27 serve as placement portions 28, and covering members 23 are placed on the placement portions 28 in a manner to cover the slits 27.

When seen in a plan view, each of the covering members 23 is rectangular and elongated in the orthogonal direction. In the orthogonal direction, the length of the covering members 23 is substantially the same as the length of the support plates 24 and 25. Each covering member 23 includes a tapered portion 23a, whose cross section perpendicular to the orthogonal direction is tapered upward. In the present embodiment, each covering member 23 is an angle steel member whose cross section is roughly inverted V-shaped as shown in Fig. 5. It should be noted that the cross section of each covering member 23 need not be roughly inverted V-shaped as mentioned above, but may alternatively be trapezoidal. Each covering member 23 is disposed such that inner peripheral surfaces 23b of the tapered portion 23a face downward. The two inner peripheral surfaces 23b are inclined such that the distance therebetween decreases upward. A plurality of spacers 22 are mounted to each of the two inner peripheral surfaces 23b.

Each of the plurality of spacers 22 is a roughly rectangular plate-shaped member, and has a predetermined thickness. The plurality of spacers 22 are arranged in a line in the orthogonal direction on each of the inner peripheral surfaces 23b of the tapered portion 23a of the covering member 23. When the covering member 23 is placed over the slit 27, the covering member 23 contacts with the placement portions 28. To be more specific, when the covering member 23 is placed over the slit 27, each spacer 22 contacts with a corner portion 28a, which is the upper end of the flange portion 24b (or of the flange portion 25b) and which is the corner portion on the far side from the slit 27. In this manner, the plurality of spacers 22 are interposed between the covering member 23 and the placement portions 28, and the covering member 23 is placed on the placement portions 28 over the slit 27.

The covering member 23 placed in the above manner is disposed such that, when seen in a plan view, the ridge portion of the covering member 23 coincides with the slit 27. The covering member 23 thus disposed has a length in the orthogonal direction, which is substantially the same as the distance between the pair of attachment plates 26. Both ends of each covering member 23 in the orthogonal direction are welded and fixed to the opposite surfaces 26a, respectively. That is, each covering member 23 is provided in a manner to extend between the pair of attachment plates 26 in a bridging manner, and the entire slits 27 are covered by the covering members 23 from above. Accordingly, above each slit 27, an inner space 23d is formed, which is surrounded by the covering member 23 and the placement portions 28 and which has a roughly triangular cross-sectional shape.

Each of the plurality of spacers 22 is formed to be short so that the plurality of spacers 22 can be arranged on each inner peripheral surface 23b, and also, the plurality of spacers 22 arranged on the inner peripheral surface 23b are spaced apart from each other in the orthogonal direction. In the present embodiment, three spacers 22 are provided on each inner peripheral surface 23b, such that the spacers 22 are arranged at a right-side position, a left-side position, and a middle position on the inner peripheral surface 23b in the orthogonal direction, respectively. Accordingly, horizontally long openings 29 extending in the orthogonal direction are formed on both right and left sides of the three spacers 22 in the orthogonal direction. The height of each opening 29 is defined by the thickness of the spacers 22 interposed between the tapered portion 23a of the covering member 23 and the corner portion 28a. That is, the height of each opening 29 is a substantially constant dimension (specifically, the height of each opening 29 is substantially the same as the thickness of the spacers 22). The plurality of openings 29 having such a shape are connected to the slit 27 via the inner space 23d, and form a cooling passage 30 together with the inner space 23d and the slit 27.

In each cooling grate 1 thus configured, end portions of the pair of attachment plates 26 in the conveying direction protrude farther than the end support plates 25 in the conveying direction. The plurality of cooling grates 1 are arranged in the conveying direction in such a manner that end portions of the pair of attachment plates 26 in the conveying direction of one cooling grate 1 are butted with end portions of the pair of attachment plates 26 in the conveying direction of another cooling grate 1. As a result, a gap 31 is formed between the end support plates 25 that are adjacent to each other. A fixed plate 32 is provided between the other ends of the respective web portions 25a of the adjacent end support plates 25 in a bridging manner so as to cover the gap 31. The length of the fixed plate 32 in the orthogonal direction is substantially the same as the length of the end support plates 25 in the orthogonal direction. The fixed plate 32 is roughly strip-shaped when seen in a plan view. Both ends of the fixed plate 32 in the conveying direction are welded to the other ends of the respective web portions 25a, and thereby the adjacent end support plates 25 are coupled together by the fixed plate 32, that is, the cooling grates 1 are coupled together by the fixed plate 32. The plurality of cooling grates 1 are arranged continuously by coupling the cooling grates 1 together in this manner, and thereby the coupled grate unit 18 is formed. The fixed plate 32 is disposed such that it is interposed between the pair of attachment plates 26, and both ends of the fixed plate 32 in the orthogonal direction are welded to the pair of attachment plates 26, respectively. In this manner, the entire gap 31 is covered by the fixed plate 32, and leakage of the cooling air through the gap 31 is prevented.

In the coupled grate unit 18 thus configured, on each of the right and the left sides thereof, a line of attachment plates 26 coupled together is formed. These lines of attachment plates 26 are welded to the pair of side walls 17a, respectively. In this way, the coupled grate unit 18 is mounted to the pair of side walls 17a of the casing 17 so as to extend therebetween in a bridging manner as previously mentioned. Each cooling grate line 13 is formed by mounting the coupled grate unit 18 to the casing 17 in this manner.

The cooler apparatus 2 includes the plurality of cooling grate lines 13, each of which is configured as described above. As shown in Fig. 3, the plurality of cooling grate lines 13 are arranged in the orthogonal direction with a gap 33 formed therebetween, such that the plurality of cooling grate lines 13 do not contact with each other. Between two adjacent cooling grate lines 13, the adjacent side walls 17a are provided with a cover that is not shown so that cement clinker will not enter the gap 33. The cover is placed over the upper ends of the respective adjacent side walls 17a in such a manner that the adjacent cooling grate lines 13 are movable relative to each other and cement clinker is prevented from entering the gap 33 between the adjacent cooling grate lines 13.

In the cooler apparatus 2 thus configured, the clinker bed 14 is formed on the plurality of cooling grate lines 13 arranged in the orthogonal direction (i.e., on the support plates 24 and 25) as previously mentioned. The clinker bed 14 includes a dead layer 35 formed on the cooling grate lines 13 and an active layer 36. The dead layer 35 is formed by low-temperature cement clinker (low-temperature granular buried material) deposited on the cooling grate lines 13, the low-temperature cement clinker having a lower temperature than the temperature of the cement clinker that is the granular conveyed material (hereinafter, "conveyed clinker"). The active layer 36 is formed on the dead layer 35 by depositing the high-temperature conveyed clinker on the dead layer 35. Accordingly, the cooling grate lines 13 (the support plates 24 and 25) support the high-temperature conveyed clinker via the dead layer 35, and the dead layer 35 protects the cooling grate lines 13 (the support plates 24 and 25) from the high-temperature conveyed clinker. The cooler apparatus 2 further includes a plurality of inner partition plates 41 intended for retaining, and restricting the movement of, the dead layer 35 on the cooling grate lines 13.

Each inner partition plate 41 is a plate-shaped member that is roughly trapezoidal when seen in a front view from one side in the conveying direction. The plurality of inner partition plates 41 are arranged on the cooling grate lines 13 at a predetermined pitch. To be more specific, the inner partition plates 41 are provided upright in a manner to extend upward from the respective fixed plates 32, which couple the cooling grates 1 together. The plurality of inner partition plates 41 are arranged on the cooling grate lines 13 at the pitch that is substantially the same as the length of each cooling grate 1 in the conveying direction. The upper ends of all the inner partition plates 41 are positioned evenly at the same height.

In the cooler apparatus 2 thus configured, the granular cement clinker discharged from the rotary kiln 7 is received on the fixed inclined grate 11 and rolls toward the cooling grate lines 13. Then, the cement clinker is deposited on the cooling grate lines 13 to form the clinker bed 14 on the cooling grate lines 13. The clinker bed 14 is conveyed in the conveying direction by a method previously described. While the clinker bed 14 is being conveyed, the cooling air supply unit 19 (fan) operates, and thereby cooling air is supplied from the cooling air supply unit 19 to the lower space 20 through the opening groove 17c. The cooling air in the lower space 20 is released to the outside of the lower space 20 from the openings 29 through the plurality of cooling passages 30. The released cooling air flows upward through the cement clinker of the dead layer 35, and pressure loss occurs while the cooling air flows upward. Then, the cooling air reaches the active layer 36. While flowing though the high-temperature conveyed clinker, the cooling air cools down the high-temperature conveyed clinker by exchanging heat therewith. Then, the cooling air is released above from the active layer 36. The temperature of the air released above is high due to the heat exchange with the conveyed clinker. Part of the released air is discharged from the cooler apparatus 2, and is introduced directly into the kiln 7, or into the precalciner 6 through a discharge pipe 51. Thus, in the cooler apparatus 2, the conveyed clinker of the clinker bed 14 is conveyed by the cooling grates 1 while being cooled down, and the conveyed clinker is kept cooled down to a temperature that is higher than the atmospheric temperature by several tens of temperatures.

In each cooling grate 1 of the cooler apparatus 2 having the above-described functions, the tapered portion 23a of each covering member 23 is placed on the placement portions 28 via the spacers 22. Therefore, at the time of mounting the covering member 23 on the placement portions 28, the covering member 23 can be placed on the placement portions 28 in a state where the covering member 23 is positioned at a desirable position by the wedge effect of the tapered portion 23a. This makes it possible to prevent the covering member 23 from being disposed at an undesirable position, and the spacers 22 can be assuredly interposed between the covering member 23 and the placement portions 28. In addition, by interposing the spacers 22 between the covering member 23 and the placement portions 28, the height of the plurality of openings 29 formed between the covering member 23 and the placement portions 28 can be made substantially constant (i.e., made substantially the same as the thickness of the spacers 22), and thus variation in the height of the plurality of openings 29 can be suppressed. By suppressing variation in the height of the plurality of openings 29 and suitably setting the intervals between the spacers 22, the pressure loss occurring when the cooling air passes through the cooling passage 30, i.e., the passing pressure loss, can be precisely set. This makes it possible to suppress the passing pressure loss of the cooling air passing through the cooling grates 1, more specifically, the passing pressure loss of the cooling air passing through the cooling passages 30, from varying in the orthogonal direction. Therefore, the cooling air with suitable passing pressure loss can be supplied to the dead layer 35, and unevenness in the air flow due to factors such as variation in the height of the active layer 36 and uneven grain diameter distribution of the conveyed clinker forming the active layer 36 can be suppressed. This makes it possible to evenly cool down the conveyed clinker of the active layer 36.

In the cooling grate 1, the spacers 22 are welded to each tapered portion 23a. The surface area of each tapered portion 23a is larger than the surface area of the upper ends of the flange portions 24b of the support plates 24 or the flange portions 24b and 25b of the support plates 24 and 25. For this reason, welding the spacers 22 to the inner peripheral surfaces 23b of each tapered portion 23a is easier than welding the spacers 22 to the upper ends of the flange portions 24b, or 24b and 25b. Therefore, the assemblability of the cooling grate 1 can be improved by welding the spacers 22 to the inner peripheral surfaces 23b of each tapered portion 23a. Further, in the cooling grate 1, the tapered portions 23a expanding downward are placed on the flange portions 24b and 25b extending upward, and under each tapered portion 23a, spaces 37 are formed outside the respective flange portions 24b, or 24b and 25b, such that each space 37 is wedge-shaped and narrows down toward the openings 29. Accordingly, even if force that causes movement of the granular material buried in the spaces 37 under the tapered portion 23a, i.e., the low-temperature cement clinker, toward the openings 29 is exerted, the wedge shape of each space 37 exerts pressure in a direction orthogonal to the moving direction, and thereby the movement of the granular material is suppressed. This makes it possible to suppress the granular material with a relatively small grain diameter, i.e., the low-temperature cement clinker, from entering the lower space 20 through the openings 29.

In the cooling grate 1, the plurality of support plates 24 and 25 are arranged in the conveying direction at intervals. Accordingly, the slits 27 are arranged so as to extend in the orthogonal direction, and also, the flange portions 24b and 25b forming the slits 27 and the covering members 23 covering the entire slits 27 are arranged so as to extend in the orthogonal direction. As a result, in the cooling grate 1, protruding portions each extending in the orthogonal direction are arranged in the conveying direction at intervals, and the low-temperature cement clinker forming the dead layer 35 is in contact with the protruding portions. Consequently, movement of the low-temperature cement clinker of the dead layer 35 in the conveying direction can be suppressed. This makes it possible to retain the dead layer 35 on the cooling grates 1, and the function of protecting the cooling grates 1 by the dead layer 35 can be maintained.

Each cooling grate line 13 is formed by coupling the unitized cooling grates 1 together. This makes it possible to reduce the size of each cooling grate 1, and improve the portability of the cooling grate 1. This consequently makes it possible to ease the manufacturing of the cooler apparatus 2. The cooling grates 1 are fixed to each other by welding the other ends of the respective web portions 25a of the adjacent end support plates 25 to the fixed plate 32. Thus, the assembling is easy. In addition, by spacing the cooling grates 1 apart from each other, the space between the covering members 23 that are adjacent to each other with the gap 31 formed therebetween can be made wide. As a result, a welding tool used in the welding work, such as a welding rod, can be readily brought close to the fixed plate 32, and thus assemblability is not impaired. Also at the time of welding the inner partition plate 41 to the fixed plate 32, the welding tool can be readily brought close to the lower end of the inner partition plate 41, which makes it possible to readily weld the inner partition plate 41 to the fixed plate 32.

Each inner partition plate 41 thus welded is buried in the dead layer 35, and suppresses the movement of the low-temperature cement clinker forming the dead layer 35. This makes it possible to prevent a situation where the conveyed clinker in the upper part of the clinker bed 14 drags the low-temperature cement clinker away and thereby the thickness of the dead layer 35 is reduced. Therefore, the function of protecting the cooling grate lines 13 by the dead layer 35 can be maintained. Since the upper ends of all the inner partition plates 41 are positioned evenly at the same height and the inner partition plates 41 are arranged at the predetermined pitch, the height of the dead layer 35 formed on the cooling grate lines 13 (i.e., the height from the bottom surface 17b of the casing 17) can be made uniform, and the passing pressure loss of the cooling air in the dead layer 35 can be made uniform. The passing pressure loss in the cooler apparatus 2 is determined by the combination of the passing pressure loss in the cooling grates 1 and the passing pressure loss in the dead layer 35. Therefore, the passing pressure loss in the cooler apparatus 2 can be suitably set by making the passing pressure loss of the cooling air in the dead layer 35 uniform and suitably setting the passing pressure loss in the cooling grates 1. By thus suitably setting the passing pressure loss in the cooler apparatus 2, unevenness in the air flow due to factors such as variation in the height of the active layer 36 and uneven grain diameter distribution of the conveyed clinker forming the active layer 36 can be suppressed, which makes it possible to evenly cool down the conveyed clinker of the active layer 36.

### [Embodiment 2]

The cooling grates 1A according to Embodiment 2 form cooling grate lines 13A included in the cooler apparatus 2. The configuration of the cooling grate 1A is similar to the configuration of the cooling grate 1 of Embodiment 1. Hereinafter, the configuration of the cooling grate 1A of Embodiment 2 is described mainly focusing on differences from the cooling grate 1 of Embodiment 1. In the description below, the same components as those of Embodiment 1 are denoted by the same reference signs as those used in Embodiment 1, and the illustration and description of such components are omitted.

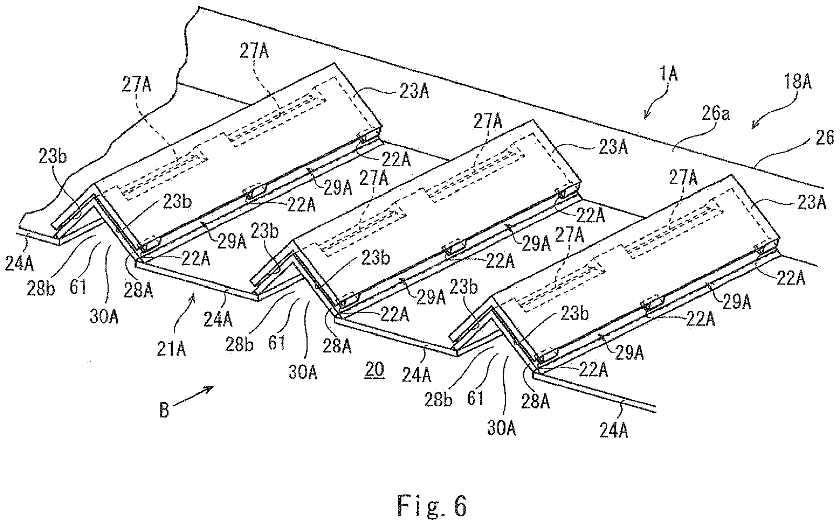

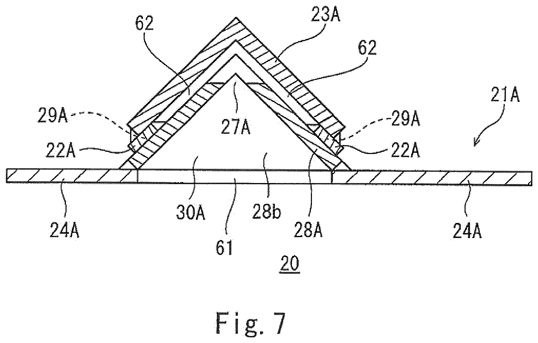

As shown in Figs. 6 and 7, the cooling grate 1A is a unitized grate that is formed by coupling together a plurality of support plates 24A, which will be described below. The cooling grate 1A includes a support body 21A, a plurality of spacers 22A, a plurality of placement bases 28A, and a plurality of covering members 23A. The support body 21A includes the plurality of support plates 24A and the pair of attachment plates 26. Each support plate 24A, which is a support member, is a flat plate extending in the orthogonal direction and strip-shaped when seen in a plan view. The plurality of support plates 24A are arranged side by side in the conveying direction at intervals. Both ends of each of the plurality of support plates 24A in the orthogonal direction are welded and fixed to the opposite surfaces 26a of the pair of attachment plates 26, respectively. In the support body 21A thus configured, a groove 61 is formed between every adjacent support plates 24A, and the plurality of placement bases 28A are arranged in a manner to cover the respective grooves 61 from above.

Each placement base 28A is a plate-shaped member extending in the orthogonal direction and strip-shaped when seen in a plan view, and is an angle steel member whose cross section perpendicular to the orthogonal direction is roughly inverted V-shaped. Each placement base 28A is formed such that, in the conveying direction, the length of the placement base 28A is slightly greater than the length of the corresponding groove 61. End portions of the placement base 28A are placed on and welded to respective adjacent end portions of the support plates 24A that are adjacent to each other. That is, the placement base 28A is provided between the adjacent support plates 24A in a bridging manner. The placement base 28A extends from one attachment plate 26 to the other attachment plate 26, and both ends of the placement base 28A in the orthogonal direction are welded and fixed to the pair of attachment plates 26, respectively. In this manner, the entire groove 61 is covered by the placement base 28A. A plurality of slits 27A spaced apart from each other are formed in the ridge portion of the placement base 28A thus disposed.

The slits 27A are grooves extending in the orthogonal direction, and are formed by, for example, cutting off the ridge portion of the placement base 28A. In the present embodiment, the placement base 28A is provided with two slits 27A, which are arranged side by side in the orthogonal direction. The slits 27A thus formed are arranged such that, when seen in a plan view, the slits 27A coincide with the position between the two adjacent support plates 24A, i.e., coincide with the groove 61. A covering member 23A is placed on the placement base 28A in a manner to cover the slits 27A.

The shape of the covering member 23A and the shape of the placement base 28A are similar to each other except the presence or absence of the slits 27A. That is, the covering member 23A is a plate-shaped member extending in the orthogonal direction and strip-shaped when seen in a plan view, and is an angle steel member whose cross section perpendicular to the orthogonal direction is inverted V-shaped. A plurality of spacers 22A are fixed to both end portions of inner peripheral surfaces 23b of the covering member 23A by welding or the like. The plurality of spacers 22A are arranged on each of the end portions of the inner peripheral surfaces 23b such that, on each end portion, the plurality of spacers 22A are arranged in a line at intervals. In the present embodiment, on each of the end portions of the inner peripheral surfaces 23b, the plurality of spacers 22A are arranged at a right-side position, a left-side position, and a middle position on the end portion in the orthogonal direction, respectively. The plurality of spacers 22A are arranged such that they are interposed between the covering member 23A and the placement base 28A. Accordingly, a gap 62 between the covering member 23A and the placement base 28A is defined by the thickness of the spacers 22A. Openings 29A are formed between the spacers 22A. Since the gap between the covering member 23A and the placement base 28A is defined by the thickness of the spacers 22A, the height of each opening 29A is a substantially constant dimension. The openings 29A are connected to the slits 27A via the gap 62 between the covering member 23A and the placement base 28A, and further connected to the lower space 20 below the cooling grate 1A via the slits 27A, an inner space 28b of the placement base 28A, and the groove 61. The openings 29A form a cooling passage 30A together with the gap 62 between the covering member 23A and the placement base 28A, the slits 27A, the inner space 28b, and the groove 61. The cooling air in the lower space 20 is released through the cooling passage 30A.

Each cooling grate 1A thus configured is a unitized grate that is formed by, for example, coupling together four support plates 24A by the placement bases 28A. No placement base 28A is provided on the outer ends of the support plates 24A positioned at both ends of each cooling grate 1A in the conveying direction. The plurality of cooling grates 1A are arranged in the conveying direction at intervals such that these outer ends face each other, and the pair of attachment plates 26 is butted with the plurality of cooling grates 1A. Similar to the cooling grates 1 of Embodiment 1, a fixed plate 32 is provided between the two facing outer ends in a bridging manner, and thereby the adjacent cooling grates 1A are coupled together by the fixed plate 32. A coupled grate unit 18A extending in the conveying direction is formed by coupling the plurality of cooling grates 1A together in this manner, and each cooling grate line 13A is formed by mounting the coupled grate unit 18 to the casing 17.

The cooling grates 1A thus configured and the cooler apparatus 2 including the cooling grates 1A produce substantially the same advantageous effects as those produced by the cooling grates 1 and the cooler apparatus 2 of Embodiment 1.

### <Other Embodiments>

In the cooling grates 1 and 1A of Embodiments 1 and 2, each of the covering members 23 and 23A is an inverted V-shaped angle steel member. However, the covering members 23 and 23A need not be inverted V-shaped, but may be trapezoidal or flat plate-shaped. Although the spacers 22 are mounted to the covering members 23 by welding, as an alternative, the spacers 22 may be mounted to the upper ends of the placement portions 28 by welding or the like, and the mounting positions are not particularly limited. The number of and length of support plates 24, 25, and 24A included in the cooling grates 1 and 1A and the number of and length of the cooling grates 1 and 1A included in the coupled grate units 18 and 18A in the above description are merely examples, and these numbers and lengths may be set arbitrarily. Further, in the cooling grate 1, each pair of placement portions 28 is formed by two flange portions 24b, or 24b and 25b. However, it is not essential that each pair of placement portions 28 be formed by two flange portions. Alternatively, each placement portion 28 may be formed by only one of the two flange portions.

### Reference Signs List

- 1, 1A: cooling grate
- 2: cooler apparatus
- 13: cooling grate line
- 22, 22A: spacer
- 23, 23A: covering member
- 23a: tapered portion
- 24: middle support plate (support member)
- 24A: support plate (support member)
- 24b: flange portion
- 25: end support plate (support member)
- 25b: flange portion
- 27, 27A: slit
- 28: placement portion
- 28A: placement base
- 32: fixed plate
- 35: dead layer
- 61: groove

## Claims

1. A cooling grate of a cooler apparatus for cooling down a high-temperature granular conveyed material with cooling air while conveying the high-temperature granular conveyed material, the cooling grate comprising:
a plurality of support members that support the granular conveyed material via a dead layer, the dead layer being formed by a granular buried material deposited on upper surfaces of the plurality of support members, the granular buried material having a lower temperature than a temperature of the granular conveyed material, the plurality of support members being arranged in a predetermined direction at intervals such that the slits are formed therebetween, the slits allowing the cooling air to pass therethrough, the cooling air being supplied to the granular conveyed material through the dead layer; and
a plurality of covering members, each of which covers an entirety of a corresponding one of the slits from above, wherein
each of the plurality of support members includes placement portions, such that the placement portions of the plurality of support members extend along the entire slits and are positioned at both sides of the slits in the predetermined direction, and the covering members are placed on the placement portions, and
each of the plurality of covering members includes a tapered portion whose cross section is tapered upward,
**characterized in that**
each covering member is placed on the placement portions in a state where spacers are interposed between the tapered portion and the placement portions,
the spacers are arranged at intervals in an orthogonal direction orthogonal to the predetermined direction,
each of the plurality of support members includes flange portions protruding upward,
upper ends of the respective flange portions serve as the placement portions,
the spacers are arranged on the tapered portion of each covering member, and
each covering member is placed on the placement portions in a state where the spacers are in contact with upper end edges of the placement portions.

2. The cooling grate of the cooler apparatus according to claim 1, wherein
the predetermined direction is a conveying direction in which the granular conveyed material is conveyed.

3. A cooler apparatus comprising a plurality of cooling grate lines, each cooling grate line including a plurality of the cooling grates according to claim 1 or 2, the cooling grates being arranged side by side in the predetermined direction, the plurality of cooling grate lines being arranged side by side in the orthogonal direction, wherein
the plurality of the cooling grates are arranged side by side in the predetermined direction, such that the cooling grates are spaced apart from each other, and
the plurality of the cooling grates are coupled to each other by welding end portions of the support members of the cooling grates that are adjacent to each other to a fixed plate.

## Patentansprüche

1. Kühlgitter einer Kühlvorrichtung zum Abkühlen eines körnigen Hochtemperatur-Fördermaterials mit Kühlungsluft, während das körnige Hochtemperatur-Fördermaterial befördert wird, wobei das Kühlgitter Folgendes umfasst:
eine Vielzahl von Trägerelementen, die das körnige Fördermaterial über einer toten Schicht tragen, wobei die tote Schicht durch ein vergrabenes körniges Material gebildet wird, das auf oberen Flächen der Vielzahl von Trägerelementen abgelagert ist, wobei das vergrabene körnige Material eine niedrigere Temperatur als eine Temperatur des körnigen Fördermaterials aufweist, wobei die Vielzahl von Trägerelementen in Intervallen in einer vorbestimmten Richtung angeordnet sind, so dass Schlitze dazwischen gebildet werden, wobei die Schlitze erlauben, dass Kühlungsluft durch sie hindurch gelangen kann, wobei die Kühlungsluft durch die tote Schicht an das körnige Fördermaterial zugeführt wird; und
eine Vielzahl von Abdeckelementen, von denen jedes eine Gesamtheit eines entsprechenden Schlitzes von oben abdeckt, wobei
wobei jedes aus der Vielzahl von Trägerelementen Platzierungsabschnitte umfasst, so dass sich die Platzierungsabschnitte der Vielzahl von Trägerelementen entlang der gesamten Schlitze erstrecken und auf beiden Seiten der Schlitze in der vorbestimmten Richtung positioniert sind, und die Abdeckelemente auf den Platzierungsabschnitten angeordnet sind, und
wobei jedes aus der Vielzahl von Abdeckungselementen einen sich verjüngenden Abschnitt umfasst, dessen Querschnitt sich nach oben hin verjüngt,
**dadurch gekennzeichnet, dass**
jedes Abdeckungselement auf den Platzierungsabschnitten angeordnet wird in einem Zustand, in dem Abstandshalter zwischen dem sich verjüngenden Abschnitt und den Platzierungsabschnitten angeordnet sind,
die Abstandshalter in Intervallen in einer orthogonalen Richtung angeordnet sind, die orthogonal zu der vorbestimmten Richtung ist,
jedes aus der Vielzahl von Trägerelementen nach oben vorstehende Seitenwand-Abschnitte umfasst,
obere Enden der jeweiligen Seitenwand-Abschnitte als Platzierungsabschnitte dienen,
die Abstandshalter an dem sich verjüngenden Abschnitt jedes Abdeckungselements ausgerichtet sind, und
jedes Abdeckungselement auf den Platzierungsabschnitten angeordnet wird in einem Zustand, in dem die Abstandshalter mit oberen Endkanten der Platzierungsabschnitte in Berührung sind.

2. Kühlgitter einer Kühlvorrichtung nach Anspruch 1, wobei
es sich bei der vorbestimmten Richtung um eine Förderrichtung, in der das körnige Fördermaterial befördert wird, handelt.

3. Kühlvorrichtung, die eine Vielzahl von Kühlgitterlinien umfasst, wobei jede Kühlgitterlinie eine Vielzahl der Kühlgitter nach Anspruch 1 oder 2 umfasst, wobei die Kühlgitter in der vorbestimmten Richtung nebeneinander ausgerichtet sind, wobei die Vielzahl von Kühlgitterlinien in der orthogonalen Richtung nebeneinander ausgerichtet sind, wobei
die Vielzahl der Kühlgitter derart nebeneinander in der vorbestimmten Richtung ausgerichtet sind, dass die Kühlgitter voneinander beabstandet sind, und
die Vielzahl der Kühlgitter durch Verschweißen von nebeneinander liegenden Endabschnitten der Trägerelemente der Kühlgitter mit einer feststehenden Platte miteinander gekoppelt sind.

## Revendications

1. Grille de refroidissement d'un dispositif de refroidissement permettant de refroidir un matériau granulaire transporté à haute température au moyen d'air de refroidissement pendant le transport du matériau granulaire transporté à haute température, la grille de refroidissement comprenant :
une pluralité d'éléments de support qui supportent le matériau granulaire transporté au moyen d'une couche morte, la couche morte étant formée par un matériau granulaire enfoui déposé sur des surfaces supérieures de la pluralité d'éléments de support, le matériau granulaire enfoui présentant une température inférieure à celle du matériau granulaire transporté, la pluralité d'éléments de support étant agencés selon une direction prédéterminée, avec des intervalles permettant de former des fentes entre eux, lesdites fentes permettant le passage d'air de refroidissement, lequel air de refroidissement est fourni, à travers la couche morte, au matériau granulaire transporté, et
une pluralité d'éléments couvrants, chacun couvrant l'intégralité d'une fente correspondante parmi les fentes, depuis le haut ; et dans laquelle
chacun desdits éléments de support présente des parties de mise en place de telle façon que les parties de mise en place de la pluralité d'éléments de support s'étendent le long de l'intégralité des fentes et soient disposées de chaque côté des fentes dans la direction prédéterminée, et les éléments couvrants sont mis en place sur lesdites parties de mise en place, et
chacun desdits éléments couvrants présente une partie conique dont la section transversale est conique vers le haut ;
**caractérisée en ce que**
chaque élément couvrant est mis en place sur les parties de mise en place avec des entretoises interposées entre la partie conique et les parties de mise en place,
les entretoises sont agencées à intervalles dans une direction orthogonale, laquelle est orthogonale à la direction prédéterminée,
chacun desdits éléments de support présente des parties en saillie dirigées vers le haut,
des extrémités supérieures des parties en saillie respectives servent de parties de mise en place,
les entretoises sont agencées sur la partie conique de chaque élément couvrant, et
chaque élément couvrant est mis en place sur les parties de mise en place, lesdites entretoises étant en contact avec des bords d'extrémité supérieur des parties de mise en place.

2. Grille de refroidissement de dispositif de refroidissement selon la revendication 1, dans laquelle
la direction prédéterminée est une direction de transport dans laquelle est transporté le matériau granulaire.

3. Dispositif de refroidissement comprenant une pluralité de lignes de grilles de refroidissement, chaque ligne de grilles de refroidissement comportant une pluralité desdites grilles de refroidissement selon la revendication 1 ou 2, les grilles de refroidissement étant agencées côte à côte dans la direction prédéterminée, la pluralité de lignes de grilles de refroidissement étant agencées côte à côte dans la direction orthogonale, et dans lequel
la pluralité de grilles de refroidissement sont agencées côte à côte dans la direction prédéterminée de telle façon que les grilles de refroidissement sont espacées les unes des autres, et
la pluralité de grilles de refroidissement sont couplées les unes aux autres par soudage de parties terminales des éléments de support des grilles de refroidissement qui sont adjacentes les unes aux autres à une plaque fixe.
